# EUROPEAN PATENT APPLICATION

(11) **EP 3 125 114 A1**
(43) Date of publication of application: **01.02.2017**
(21) Application number: 15769462.1
(22) Date of filing: 20.03.2015
(51) Int. Cl.: G06F 9/46, G06F 9/48, G06F 9/50

(54) **VIRTUAL MACHINE SYSTEM, CONTROL METHOD THERFOR, AND CONTROL PROGRAM RECORDING MEDIUM THEREFOR**

(30) Priority: 27.03.2014 JP 2014065793
(71) Applicant: NEC Corporation, Tokyo 108-8001 (JP)
(72) Inventor: IGUCHI, Tomohito, Tokyo 108-8001 (JP)
(74) Representative: Betten & Resch
(86) International application number: PCT/JP2015/001577
(87) International publication number: WO 2015/146104

(57) **Abstract**

[Technical Problem] To maximize utilization efficiency of hardware resources in a hypervisor type of virtual machine systems.

[Solution to Problem]A scheduler control means 300 has virtual CPU generation means 310 for generating a plurality of virtual CPUs which operate once per predetermined operation cycle of a CPU resource 100 and virtual machine group generation means 320 for grouping virtual machines VMs into a plurality of groups. Furthermore, the scheduler control means 300 has virtual machine running period setting means 330 for assigning each virtual machine group VMG to each of the virtual CPUs_VCPUs. The virtual machine running period setting means 330 also sets up an operation period on each virtual machine to ensure a running within an operation period of a virtual CPU_VCPU for the first virtual machine VM in the virtual machine group VMG.

## Description

### [Technical Field]

The present invention relates to a virtual machine system, a control method thereof, and a control program recording medium thereof.

### [Background Art]

The spread of server virtualization features has increased frequency of operating a plurality of virtual machines on a hardware resource, such as CPU (Central Processing Unit), and utilizing a hardware resource efficiently.

In a hypervisor type of virtualization, a scheduler that a hypervisor has assigns hardware resources to each virtual machine in a time division manner to process and a plurality of virtual machines operate. For utilizing the hardware resource efficiently, how the scheduler is controlled is important.

For example, PTL 1 discloses the technology for achieving efficiency by dividing a predetermined cycle into periods assigned to virtual machines requiring real-time access and accepting non-real-time access and assigning priority to each virtual machine.

### [Citation List]

### [Patent Literature]

[PTL 1] Japanese Unexamined Patent Application Publication No. 2011-198346
[PTL 2] Japanese Unexamined Patent Application Publication No. 2003-177928

### [Summary of Invention]

### [Technical Problem]

However, with the technique of PTL 1, a load for controlling operation orders increases due to assigning priority to all of the respective virtual machines. Also, there is a possibility of a waste of hardware resources caused by making an operation period unit of operation time too small and switching virtual machines often.

The present invention is based on the consideration of the aforementioned problems and intended to provide a virtual machine system which improves utilization efficiency of hardware resources.

### [Solution to Problem]

For solving the aforementioned problems, the virtual machine system of the present invention has a CPU resource which performs a calculation, a plurality of virtual machines which run on the CPU resource, a hypervisor which is provided with a scheduler for controlling an operation schedule of the CPU resource and mediates between the CPU resource and the virtual machines, and a scheduler control means for controlling the scheduler, wherein the scheduler control means has virtual CPU generation means which generates a plurality of virtual CPUs which operate at least once per predetermined operation cycle of the CPU resource, virtual machine group generation means which groups the plurality of virtual machines into a plurality of virtual machine groups, and a virtual machine running period setting means which assigns each of the virtual machine groups to each of the virtual CPUs and assigns a running period in an operation period of the virtual CPU to each virtual machine so as to ensure the first virtual machines in each virtual machine groups have a running period within an operation period of the virtual CPU.

### [Advantageous Effects of Invention]

An effect of the present invention is that utilization efficiency of hardware resources in a virtual machine system can improve.

### [Brief Description of Drawings]

Fig. 1 is a block diagram showing the first exemplary embodiment of the present invention;
Fig. 2 is an exemplary diagram showing a corresponding example of the virtual machine groups and the virtual CPUs in the second exemplary embodiment of the present invention;
Fig. 3 is a timing chart showing an example of assigning operation periods of the virtual CPUs in the second exemplary embodiment of the present invention;
Fig. 4 is a timing chart showing an example of assigning operation periods in a virtual machine group in the second exemplary embodiment of the present invention;
Fig. 5 is a block diagram showing the third exemplary embodiment of the present invention;
Fig. 6 is a timing chart showing a comparison example of the third exemplary embodiment of the present invention;
Fig. 7 is a timing chart showing the third exemplary embodiment of the present invention;
Fig. 8 is a block diagram showing the fourth exemplary embodiment of the present invention;
Fig. 9 is a timing chart showing the fourth exemplary embodiment of the present invention; and
Fig. 10 is a block diagram showing the fifth exemplary embodiment of the present invention.

### [Description of Embodiments]

With reference to the drawings, the followings describe the present invention in details.

### <First Exemplary Embodiment>

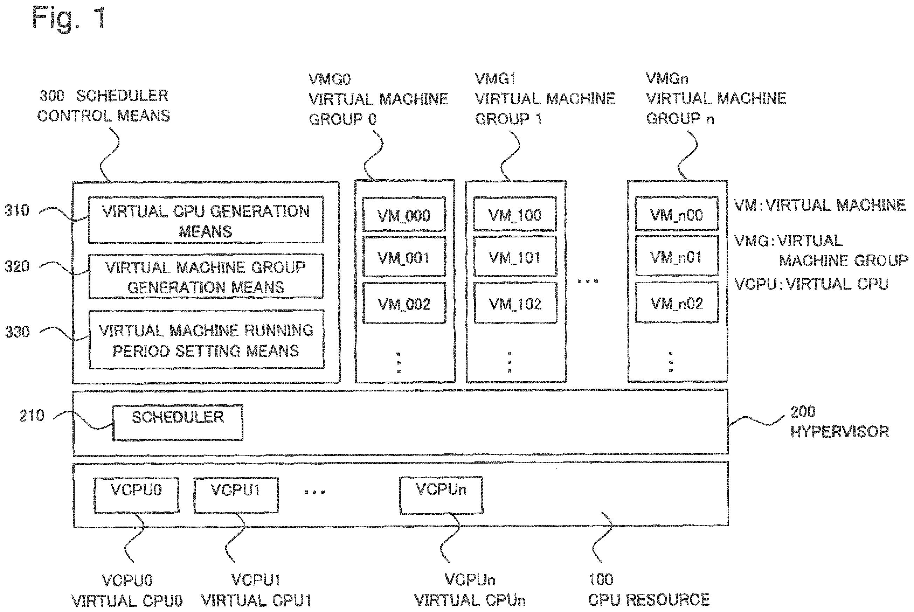

Fig. 1 shows a block diagram of the virtual machine system of this exemplary embodiment.

The virtual machine system has a CPU resource 100 for performing a calculation, a plurality of virtual machines VMs which run on the CPU resource 100, and a hypervisor 200 for mediating between the CPU resource 100 and the virtual machines VMs.

The hypervisor 200 has a scheduler 210 for controlling an operation schedule of the CPU resource and the virtual machine system has scheduler control means 300 for controlling the scheduler 210.

The scheduler control means 300 has virtual CPU generation means 310 for generating a plurality of virtual CPUs which operate once per predetermined operation cycle of the CPU resource 100 and virtual machine group generation means 320 for grouping virtual machines VMs into a plurality of groups. Furthermore, the scheduler control means 300 has virtual machine operation period setting means 330 for assigning each virtual machine group VMG to each virtual CPU_VCPU. Also, the virtual machine running period setting means 330 sets up an operation period on each virtual machine to ensure an operation within an operation period of a virtual CPU_VCPU for the first virtual machine VM in the virtual machine group VMG.

Fig. 1 shows an example where a virtual machine group VMG0 includes virtual machines VM_000, VM001, VM002, and so forth. Fig. 1 also shows an example where a virtual machine group VMG1 includes virtual machines VM_100, VM101, VM102, and so forth and a virtual machine group VMGn includes virtual machines VM_n00, VMn01, VMn02, and so forth. An example where virtual CPUn_VCPUn, such as virtual CPU0_VCPU0 and virtual CPU1_VCPU1, are generated on the CPU resource 100 is also shown.

The configuration as described above enables the CPU resource to be assigned to a plurality of virtual machines without waste and can ensure that a virtual machine which requires an ensured operation within a predetermined period operates.

### <Second Exemplary Embodiment>

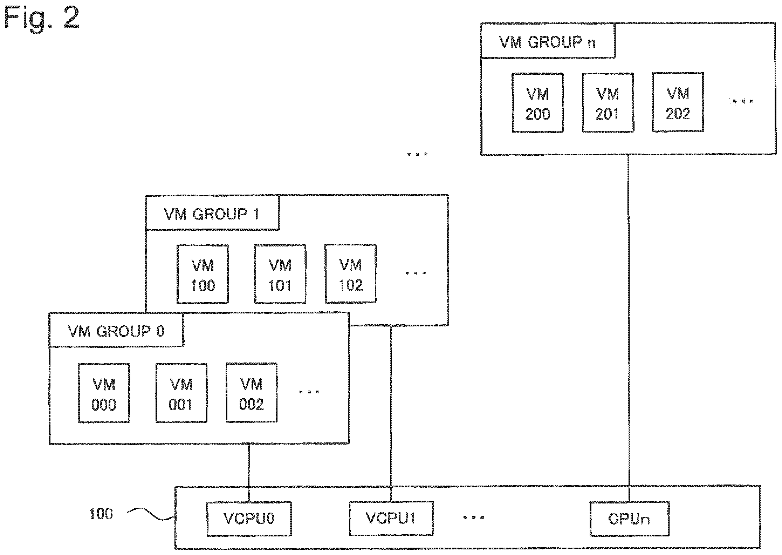

Fig. 2 is an exemplary diagram showing an example of a method for assigning virtual machine groups (VM groups) to virtual CPUs. In this example, n+1 VM groups are assigned to n+1 virtual CPUs (VCPUs). The diagram shows the following assignments: a VM group 0 to VCPU0, a VM group 1 to VCPU1, and a VM group n to VCPUn.

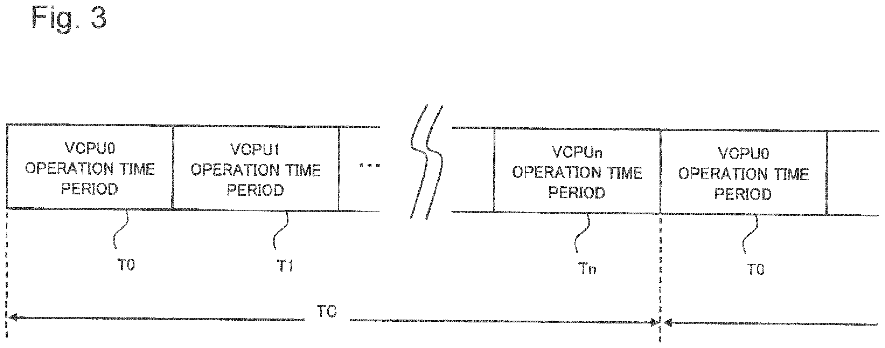

Fig. 3 is a timing chart showing an example of assigning operation periods of VCPUs in a predetermined time cycle TC of a CPU resource. During one time cycle TC, periods (the operation time period T0, T1, ..., Tn) in which respective virtual CPUs (VCPUO, VCPU1, ..., VCPUn) operate once are set.

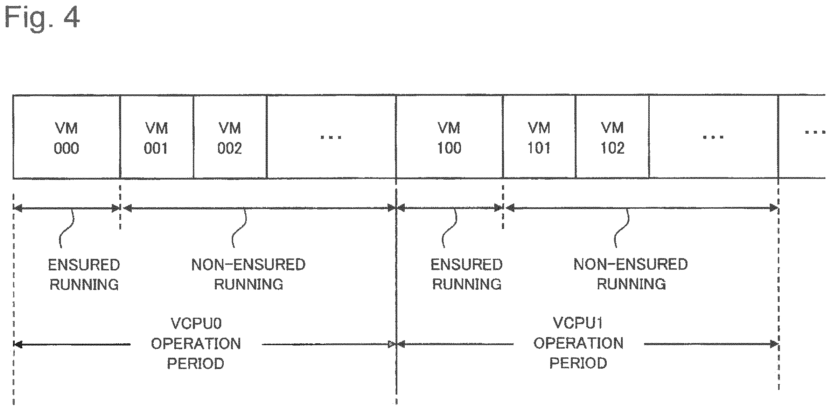

Fig. 4 is a timing chart schematically showing a method for assigning a running period of each virtual machine within an operation period of each virtual CPU. In this diagram, the first virtual machine in each group has 0 as the last digit. It is ensured that the first virtual machine VM in a group operates within such operation period. In the example of Fig. 4, it is ensured that VM000 operates and not ensured that VM001, VM002, or the other virtual machines operate during the VCPU0 operation period. It is also ensured that VM100 operates and not ensured that VM101, VM102, or the other virtual machines operate during the VCPU1 operation period.

As described above, with this exemplary embodiment, it is easy to execute scheduling for assigning an operation period while ensuring operation of VMs whose operations require being ensured.

In addition, it is assumed that each virtual CPU operates once every time cycle TC in the explanation above, but it is also no problem that some virtual CPUs operate twice or more in every time cycle TC.

### <Third Exemplary Embodiment>

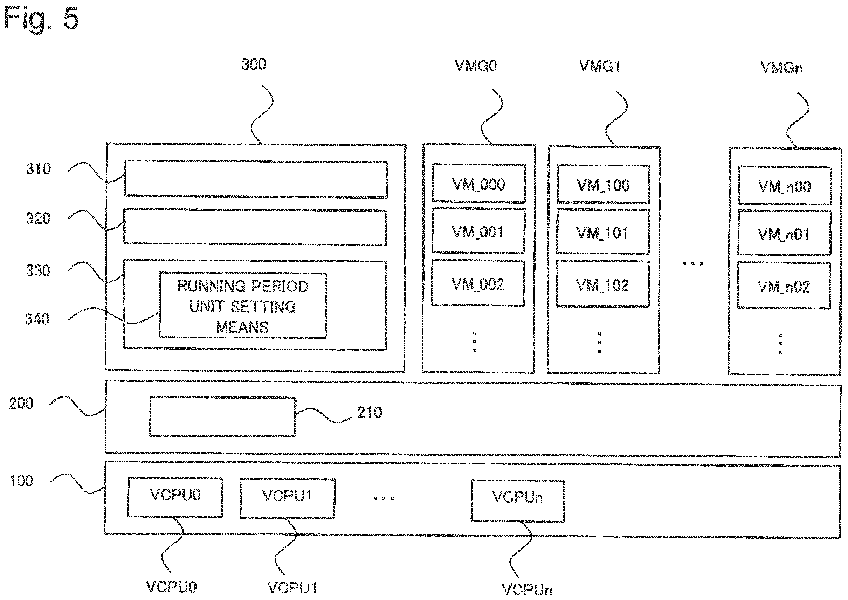

Fig. 5 is a block diagram showing the third exemplary embodiment of the present invention. In this exemplary embodiment, the virtual machine running period setting means 330 includes running period unit setting means 340. The running period unit setting means 340 sets up a unit of a running period assignment to one virtual machine VM. It is noted that this diagram shows the following inclusion relation. VMG0 has VM_000, VM_001, VM_002, and so forth, VMG1 has VM_100, VM_101, VM_102, and so forth, and VMGn has VM_n00, VM_n01, VM_n02, and so forth. The CPU resource 100 also has VCPU0, VCPU1, ..., VCPUn.

Next, the operation of the running period unit setting means 340 is explained. First, for comparison, the operation without setting up a running period unit is described. It is noted that the running period unit is also called granularity.

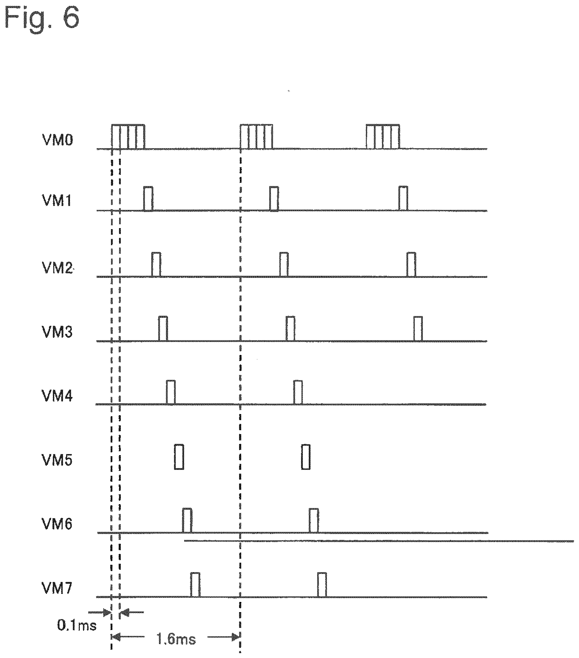

Fig. 6 is a timing chart showing an example of an operation without setting up an operation period unit. In this diagram, the case where an VM0's operation of 0.4 ms has to be ensured within a period of 1.6 ms is considered. The other virtual machines VMs are to operate for 0.1 ms each time.

Without setting up a running period unit, it is assumed that the scheduler assigns a running to each virtual machine, VM0, VM1, VM2, or so forth in increments of 0.1 ms. First, VM0 runs for 0.4 ms, and then VM1 operates for 0.1 ms. The runnings are switched to the following machines, VM2, VM3, ..., VM7, every 0.1 ms. After 1.6 ms from the first operation, VM0 operates for 0.4 ms again. In this manner, up to eight switches occur for 1.6 ms. When the VMs are frequently switched in this way, non-operation periods caused by the switches increase and the utilization efficiency of the CPU resources decreases.

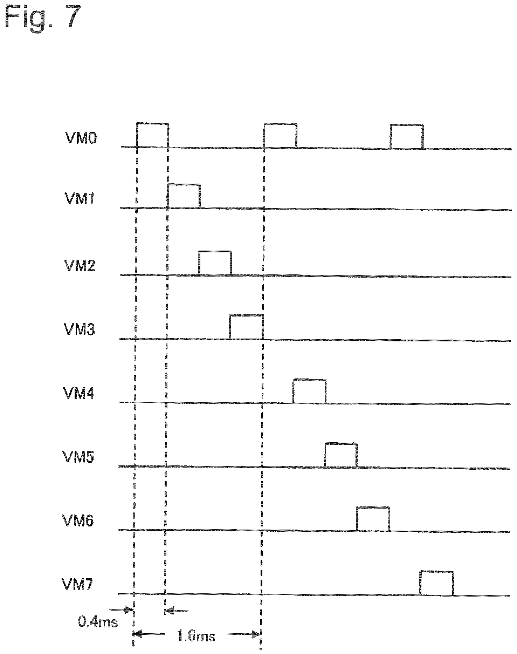

In the meantime, a proper setup of the running period unit enables loss caused by the frequent switches to get smaller. Fig. 7 is a timing chart showing this aspect. In this diagram, the unit of 0.4 ms is set up based on VM0. In Fig. 7, VM0 first operates for 0.4 ms, and then VM1 runs for 0.4 ms. Next, VM2 and VM3 operate for 0.4 ms each and VM0 operates again for 0.4 ms in 1.6 ms. The following runnings are sequentially switched to VM4 and VM5. In this case, only four switches occur for 1.6 ms. This reduces loss caused by the VM switches. The proper setup of the granularity in this manner can make the utilization efficiency of the CPU resources high.

In the meantime, if the granularity is set too large, more time than required operation time is assigned to each VM and more blank time without CPU operations possibly occur. This disenables the CPU ability to be fully utilized. Therefore, increase in the granularity needs to be avoided. In this exemplary embodiment, users can set up a proper granularity with the running period unit setting means 340.

As explained above, the granularity cannot be too small or large, and with this exemplary embodiment, the granularity can be set up to a proper value. This allows for minimization of summation of losses caused by the switches and excessively long assigned periods to improve the utilization efficiency of the CPU resources.

### <Fourth Exemplary Embodiment>

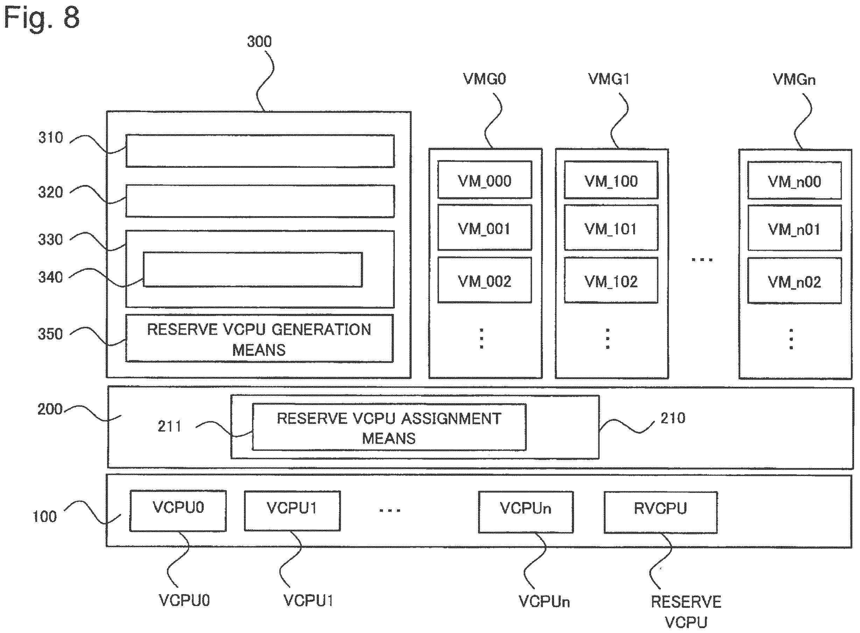

Fig. 8 is a block diagram showing the fourth exemplary embodiment of the present invention. In this exemplary embodiment, the scheduler control means 300 has reserve VCPU generation means 350. The reserve VCPU generation means 350 generates a reserve VCPU_RVCPU on the CPU resource 100. Also, the scheduler 210 of this exemplary embodiment has reserve CPU assignment means 211 for assigning a virtual machine to this RVCPU. It is noted that the other elements shown in this diagram, which have matching signs shown in Fig. 5, are used in the same way as Fig. 5. Therefore, their explanations are omitted.

The virtual machine running period setting means 330 does not set up any schedules for a reserve VCPU_RVCPU in advance. For an operation period of a reserve VCPU_RVCPU, according to an operation status of each virtual machine, an operation is preferentially assigned to a virtual machine whose state is busy. This assignment control is performed by the reserve VCPU assignment means 211.

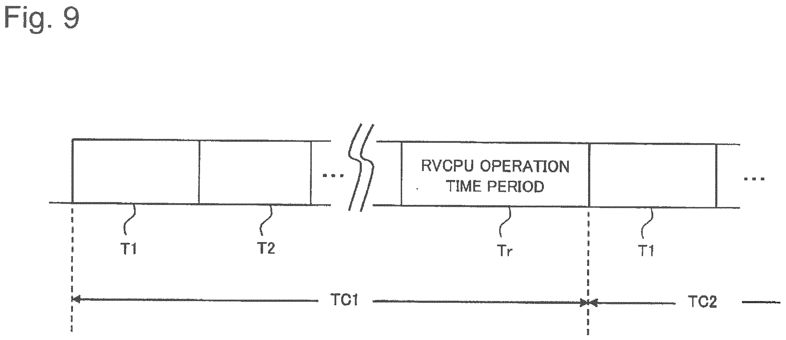

Fig. 9 is a timing chart showing an operation during this time period. To a reserve VCPU_RVCPU, an RVCPU operation time period Tr is assigned. The VM assignment during Tr is performed by the reserve VCPU assignment means 211 according to the circumstances. A flexible response can be made, for example, assigning an operation again to a VM whose operation is ensured and which has operated during the cycle. It is noted that two or more reserve virtual CPUs can be set. In addition, in Fig. 9, examples of the other virtual CPUs' operation periods T1, T2, and so forth are shown.

As explained above, this exemplary embodiment makes it possible to efficiently utilize CPU resources because a period assigned to a reserve CPU can be used according to the circumstances.

### <Fifth Exemplary Embodiment>

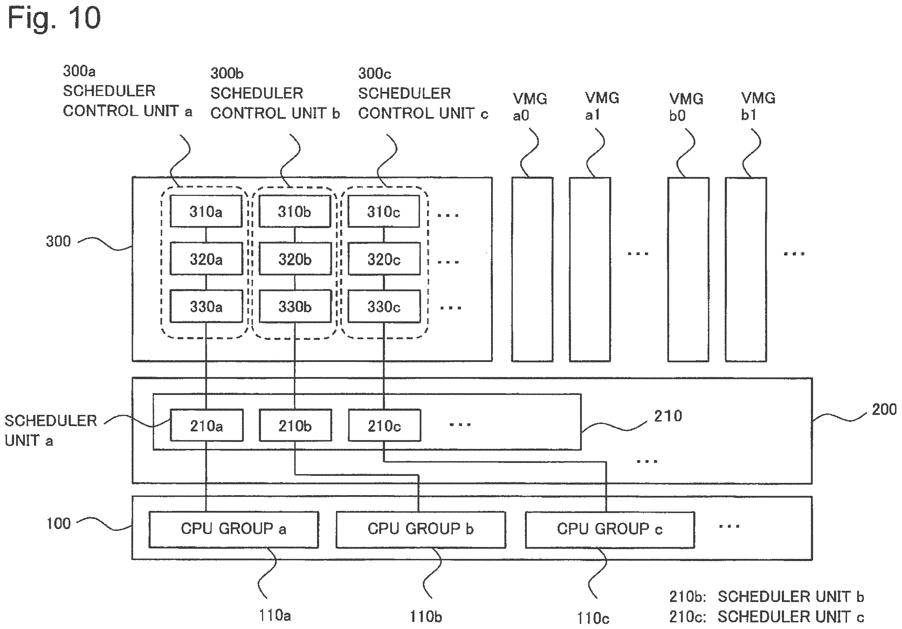

Fig. 10 is a block diagram showing the fifth exemplary embodiment. In this exemplary embodiment, the CPU resource 100 has a plurality of CPU groups 110 which are physically separate.

In an example of Fig. 10, the CPU 100 has a CPU group a 110a, a CPU group b 110b, a CPU group c 110c, and so forth. Each of these CPU groups is handled by the virtual CPU generation means 310, the virtual machine group generation means 320, and the virtual machine running period setting means 330, and scheduling is done per CPU group. A scheduler unit 210a which controls the CPU group a 110a is controlled by a scheduler control unit 300a which has 310a, 320a, and 330a. A CPU group b 110b, 110c, and so forth are similarly controlled by a scheduler control unit 300b, 300c, and so forth. In this example, a scheduler control unit 300b has virtual CPU generation means 310b, virtual machine group generation means 320b, and virtual machine operation period setting means 330b. A scheduler control unit 300c also has virtual CPU generation means 310c, virtual machine group generation means 320c, and virtual machine operation period setting means 330c. Also, virtual machine groups VMGa0, VMGal, and so forth operate on the CPU group a 110a, and virtual machine groups VMGb0, VMGb1, and so forth operate on the CPU group a 110b.

As described above, when scheduling is controlled on a CPU group basis, the first to fourth exemplary embodiments can be applied to each CPU group similarly to the case of considering the CPU resource 100 to be one CPU.

As explained above, with these exemplary embodiments, resource utilization efficiency can get high even if a CPU resource has a plurality of CPU groups which are physically separate. The scope of the present invention includes a program which makes a computer execute processes of the first to fifth exemplary embodiments above and a recording medium storing such program. A recording medium, such as a magnetic disk, a magnetic tape, an optical disk, a magnetic optical disk, and a semiconductor memory, can be used.

The present invention is explained above, considering the aforementioned exemplary embodiments to be good examples. The present invention, however, is not limited to the exemplary embodiments above. This means that, in the present invention, various aspects those skilled in the art could understand can be applied within the scope of the present invention.

This application claims priority based on Japanese Patent Application No. 2014-065793, filed on March 27, 2014, the disclosure of which is incorporated herein in its entirety.

### [Reference signs List]

- 100: CPU resource
- 110: CPU group
- 200: Hypervisor
- 210: Scheduler
- 211: Reserve VCPU assignment means
- 300: Scheduler control means
- 310: Virtual CPU generation means
- 320: Virtual machine group generation means
- 330: Virtual machine running period setting means
- 340: Operation period unit setting means
- 350: Reserve VCPU generation means
- VM: Virtual machine
- T: Operation time period
- TC: Time cycle

## Claims

1. A virtual machine system, having:
a CPU resource which performs a calculation,
a plurality of virtual machines for which run on the CPU resource,
a hypervisor which is provided with a scheduler which controls an operation schedule of the CPU resource and mediates between the CPU resource and the virtual machines, and
a scheduler control means for controlling the scheduler,
wherein the scheduler control means has virtual CPU generation means which generates a plurality of virtual CPUs which operate at least once per predetermined operation cycle of the CPU resource, virtual machine group generation means which groups the plurality of virtual machines into a plurality of virtual machine groups, and a virtual machine running period setting means which assigns each of the virtual machine groups to each of the virtual CPUs and assigns a running period in an operation period of the virtual CPU to each virtual machine so as to ensure the first virtual machines in each virtual machine groups have running periods within an operation period of the virtual CPU.

2. The virtual machine system of claim 1, wherein the virtual machine running period setting means has a running period unit setting means which sets up running period unit.

3. The virtual machine system of claim 1 or 2, wherein the scheduler control means has reserve virtual CPU generation means which generates at least one reserve virtual CPU to which a virtual machine is not previously assigned.

4. The virtual machine system of claim 3, wherein the scheduler has reserve virtual CPU assignment means which determines the virtual machine assigned to the reserve virtual CPU according to each running state of the virtual machines.

5. The virtual machine system of any one of claims 1 to 4, wherein the CPU resource has a plurality of CPU groups which comprise the virtual CPUs, the scheduler has scheduler units dealing with each of the virtual CPU groups, and the scheduler controller has a scheduler control unit which controls the scheduler units.

6. A virtual machine system control method, comprising:
generating a plurality of virtual CPUs on a CPU resource which performs a calculation,
grouping the plurality of virtual machines to generate a plurality of virtual machine groups,
assigning the generated virtual machine groups to the virtual CPUs, and
assigns a running period in an operation period of the virtual CPU to each virtual machine so as to ensure the first virtual machines in each virtual machine groups have running periods within operation periods of the virtual CPUs.

7. The virtual machine system control method of claim 6, wherein the virtual machine running period setting means sets up running period unit.

8. The virtual machine system control method of claim 6 or 7, comprising generating at least one reserve virtual CPU to which a virtual machine is not previously assigned.

9. A recording medium which stores a virtual machine system control program, having the steps of:
generating a plurality of virtual CPUs on a CPU resource which performs a calculation,
grouping the plurality of virtual machines to generate a plurality of virtual machine groups,
assigning the generated virtual machine groups to the virtual CPUs, and
assigning a running period in an operation period of the virtual CPU to each virtual machine so as to ensure the first virtual machines in each virtual machine groups have running periods within operation periods of the virtual CPU.

10. The recording medium which stores the virtual machine system control program of claim 9, wherein the virtual machine running period setting means has a step of setting up running period unit.
